# EUROPEAN PATENT SPECIFICATION

(11) **EP 2 880 290 B1**
(45) Date of publication and mention of the grant of the patent: **05.09.2018**
(21) Application number: 13755975.3
(22) Date of filing: 31.07.2013
(51) Int. Cl.: F02D 41/02, F02D 41/14

(54) **EXHAUST GAS TREATMENT SYSTEM (ATS) BASED ON A PM-CAT FILTER**
ABGASBEHANDLUNGSSYSTEM (ATS) BASIEREND AUF EINEM PM-KATALYSATORFILTER
SYSTÈME DE TRAITEMENT DE GAZ D'ÉCHAPPEMENT (ATS) SUR LA BASE D'UN FILTRE CATALYTIQUE À PARTICULES

(30) Priority: 31.07.2012 EP 12178643; 31.07.2012 EP 12178646; 31.07.2012 EP 12178647
(43) Date of publication of application: 10.06.2015
(73) Proprietor: FPT Industrial S.p.A., 10156 Torino (IT)
(72) Inventor: CERCIELLO, Giovanni, I-10139 Torino (IT); TORBATI, Reza, I-10034 Chivasso (IT); AIMAR, Bruno, I-12020 Cartignano (IT)
(74) Representative: Franzolin, Luigi
(86) International application number: PCT/EP2013/066089
(87) International publication number: WO 2014/020064

(56) References cited:
- DE-A1-102005 025 737
- DE-C1- 10 020 170
- JP-A- 2002 097 930
- US-A1- 2007 150 162
- BECKER C ET AL: "Dieselpartikelfilter aus Cordierit", MTZ MOTORTECHNISCHE ZEITSCHRIFT, VIEWEG VERLAG, WIESBADEN, DE, vol. 69, no. 6, 1 June 2008 (2008-06-01), pages 494-501, XP001518698, ISSN: 0024-8525
- KLADOPOULOU E A ET AL: "A Study Describing the Performance of Diesel Particulate Filters During Loading and Regeneration - A Lumped Parameter Model for Control Applications", SAE WORLD CONGRESS, XX, XX, no. SAE-2003-01-0842, 3 March 2003 (2003-03-03), XP002328841,

## Description

### Application field of the invention

The present invention refers to the field of exhaust gas treatment lines (ATS: After Treatment Systems) of the type based on PM-CAT filters, also known as PM-Kat or POC (Particulate Oxidation Catalyst), or Flow-through filters (FTF) or Open particulate filters or Partial flow filter (PFF) or Partial filter technology (PFT) or PM oxidation catalyst or PM filter catalyst.

### Description of the prior art

Off-road vehicles usually use PM-CAT filters in order to capture the carbonaceous particulate matter.

Such PM-CAT filters, unlike the DPF filters (Diesel particulate filter), are open filters, in the sense that the alveoli made in the body of the filter are open and allow the passage of the gases in any saturation condition of the filter itself. The particulate matter is actually filtered by centrifugation, which causes the particulate matter to collide with and to settle within the porous walls of the alveoli, where it gets trapped.

A good survey on the PM-CAT filter is given on "Particle Oxidation Catalysts", W Addy Majewski, found on www.DieselNet.com, revision 2011.02b.

An example of commercial name of a PM-CAT device is PM-Metalit ™ of Emitec.

Details on the open filters from Emitec (EMITEC EMISSIONSTECHNOLOGIE) are in DE10020170, disclosing the closest prior art.

It comprises alternating layers of corrugated metal foil and porous sintered metal fleece. The corrugated foil is formed to direct the gas flow so it impinges onto the metal fleece. The internal surfaces of the PM-Cat do not have catalyst coatings.

The filtering power of PM-CAT filters is between 50% and 90%, thus they are to able to retain all the particulate matter until the alveoli are full the gas can flow through the filter without being treated.

Generally, both the PM-CAT and the DPF filters are coupled with a DOC (Diesel Oxidation Catalyst), which is arranged upstream of the respective filter and promotes the production of NO₂, in order to facilitate a natural reaction of the first type, namely promoting the reaction of the carbonaceous soot with the NO₂ in order to generate CO/CO2 according to the reaction

C + NO₂ -> NO + CO/CO₂

Such reaction is said to occur naturally or passively when the filter reaches an interval of temperatures comprised between 220°C and 450°C approximately. This depends on the operating conditions of the heat engine. Thus such regeneration is called low temperature passive regeneration of the first type.

A high temperature passive or natural regeneration is also known, and occurs when the filter reaches temperatures exceeding 550°C. Such natural regeneration of the second type is very rare.

PM-CAT filters may be provided as part of the original equipment or they can be bought aftermarket and installed on the vehicle, since such devices do not affect the management devices of the heat engine.

DPF filters are closed filters, they completely filter the exhaust gases and they tend to clog due to the saturation of particulate matter, in spite of the presence of such passive regeneration process.

Thus, high temperature active regeneration cycles, with temperatures from 560°C and an average value of 650°C, are commanded and managed by a control unit, in order to promote a reaction of the second type, this time being active, namely generating CO/CO₂ from the reaction of the accumulated carbonaceous soot C with the oxygen O₂, thus freeing the DPF filter and allowing the engine apparatus/exhaust line (ATS) to restore its original performance.

The regeneration procedures are also known in the filed of the open filters from DE102008058418.

A good survey on DOC is "Diesel Oxidation Catalyst", W. Addy Majewski, found on www.DieselNet.com, revision 2012.02a.

The gas temperature at the inlet of the DOC is usually held about at 400-450°C. Then due to the presence of HC, exothermal reactions are carried out within the DOC, so as the temperature at the outlet of the DOC increases by reaching said regeneration temperatures 560° - 650°C necessary for the filter following (downstream) the DOC.

The typical reaction of the second type, both active or passive is the following:

C + O₂ -> CO/CO₂

DPF filters cannot be installed aftermarket on vehicles that are not equipped with them originally, since they cannot manage the active regeneration cycles.

Type-approval cycles performed by type-approval Authorities include the test of the functioning of the heat engine according to predefined engine speed/power/time curves.

When the quantity of particulate matter released in the environment, and of the other pollutants being subject to regulations, is lower than an acceptance threshold, the engine apparatus/exhaust line passes the type approval tests. Type approval cycles and emission limits change according to the type of vehicle. The actual operating conditions of the vehicle may be very different from the type approval cycles conditions. In certain circumstances, the vehicles originally equipped with PM-CAT filters may be used in a way different from the type-approval curves, thus the filters can be completely saturated and the particulate matter produced by the heat engine will be almost totally released in the environment.

Another problem that may occur is called "blow off", wherein at certain temperatures and with some very high levels of filter saturation, high flow rates of exhaust gases may carry away the soot on the walls of the alveoli, releasing it in the environment.

Furthermore, after an excessive accumulation of soot, it may happen that the engine is brought to heat the PM-CAT filter up to promote an uncontrolled reaction of the second type, reaching and exceeding 900°C and provoking irreversible damages to the filter. A case is known when the vehicle itself took fire provoking serious damages to itself and to the surrounding environment, affecting a vast geographical area.

According to the prior art, in order to overcome such drawbacks, diagnosis systems detecting the saturation level of the PM-CAT filters are adopted. An example of such systems is given in WO2012082268.

### Summary of the invention

Therefore, a first aim of the present invention to improve the exhaust gas treatment systems based on PM-CAT filters, so that they can be more efficient, safe, and even suitable to very low-power work cycles.

These and further aims are reached by means of an exhaust gas treatment system (ATS) according to claim 1. Thanks to the present invention, it is possible to really implement a PM-CAT filter, that does not have any superficial treatment with noble metals (platinum, palladium, etc.), without running the risk of delivery unburnt hydrocarbons HC in the environment.

Advantageously, thanks to the present invention, the service life of PM-CAT filters is prolonged and their functioning is more constant and reliable in time, to the point that the treatment systems based on such filters are suitable to be installed on all vehicle categories.

In other words, thanks to the present invention, PM-CAT filters may used also in fields where only DPF filters have been used so far.

Given the remarkable differences between the costs of PM-CAT filters and DPF filters, the saving is very high.

It is also object of the present invention an exhaust gas treatment method.

It is also object of the present invention an internal combustion engine comprising the aforementioned exhaust gas treatment system and a vehicle comprising such engine.

Further details and characteristics of the invention will be described below, also with the help of the claims which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 schematically shows a catalyst-filter system according to the present invention,
figure 2 schematically shows an ATS system according to the present invention, which integrates the catalyst-filter system shown in figure 1.

In the figures the same reference numbers and letters identify the same elements or components.

### Detailed description of preferred embodiments of the invention

The system that is object of the present invention provides the active regeneration of PM-CAT filters similarly to what happens for DPF filters. The active regeneration may be a process per se known, which includes, for example, the post-injection of additional fuel during some specific strokes of the engine, so that the fuel burns in the exhaust gas treatment system rather than in the cylinders, promoting an active reaction of the second type, namely the oxidation of the carbon residues by means of oxygen.

In the following, the expression "to induce an active regeneration" will mean to increase the temperature of the ATS by enriching the fuel/air ratio and/or by fuel post-injection techniques or the like, namely independently of the work point and of the work conditions of the internal combustion engine.

The reasons of such discrimination towards the PM-CAT filters are described in detail below.

The regeneration temperature of any filter depends also on the amount of particulate matter accumulated in the filter. Thus, the application on PM-CAT filters of the same regeneration techniques as DPF filters for the same filter saturation percentage will cause an excessive increase of the temperatures reached during the regeneration process, which would damage the PM-CAT filters.

According to an embodiment of the present invention, the management of the regeneration of the PM-CAT filter is performed on the basis of a predictive estimation of the saturation level of the filter.

Advantageously, a predictive estimation of the accumulation of particulate matter avoids to reach particulate levels that may bring to an uncontrollable second type regeneration, both passive and active.

The predictive estimation is known in the field of DPF filters, but, if it was used as it is in the field of PM-CAT filters, it would be inadequate, since it would bring to an estimation of soot accumulation such that the regeneration should be five times more frequent than in the DPF filters. The estimator of the saturation level of the filter is based on:
- a first model of the grade of smoke of the heat engine, in order to estimate a first amount of particulate matter produced by the heat engine as a function of the operating conditions of the engine itself, such model can be obtained experimentally,
- a second model of the efficiency of the promotion of the first type reaction, in order to estimate a second amount of particulate converted into CO/CO₂, namely by a reaction based on the reduction of NO₂ in NO, preferably within an interval of temperatures comprised between 220°C and 450°C;
- a third model of the efficiency of the promotion of the second type reaction, in order to estimate a second amount of particulate naturally converted into CO/CO₂, namely by a natural reaction based on the reduction of O₂ during the functioning of the heat engine, which brings the ATS within an interval of temperatures comprised between 550°C and 650°C.

It is clear that the first amount of particulate matter gives an additional contribution, by settling in the alveoli of the PM-CAT filter, while the other two are subtracted from the first one. In general, the first amount is higher than the absolute value of the sum of the other two, above all when the engine operates in low power conditions, namely when the exhaust line does not reach a temperature that is high enough to allow a natural reaction of the first type. For such reason, the present invention teaches how to apply the active regeneration to the PM-CAT filter.

According to laboratory tests on specific intervals of temperature, (220 - 450°C), PM-CAT filters have proven to be more efficient than DPF filters in the promotion of first type reactions having a coefficient comprised between 1.6 and 2.

Thus, according to the present invention, the predictive estimation, in particular the second model, is modified in order to take into account the higher efficiency of the PM-CAT filters with respect to the DPF filters in promoting the reaction of the first type. Thus, said second amount, with respect to a DPF filter, is multiplied by a coefficient comprised between 1.6 and 2. Such coefficient represents a ratio between the efficiency of the PM-CAT filter and of the DPF filter in promoting the natural regeneration of the first type.

Since, in the field of passive regenerations, the reaction of the first type is predominant, the higher efficiency of the PM-CAT filter in promoting the reactions of the first type has to be taken into account and implies a reduction of the aforementioned estimation of the regeneration frequency. After months of tests, it has been understood that the reason of such anomalous behaviour is connected to the intrinsic characteristics of PM-CAT filters, which filtrate only 50% - 90% of the particulate produced by the heat engine. Thus, according to the present invention, the first model of the grade of smoke, which depends only on the characteristics of the heat engine, was weighted with a coefficient comprised between 0.5 and 0.9, namely equal to the filtration/capture/retention efficiency of the particulate matter filter.

Further tests have validated the solution identified above. The fact that the regeneration frequency is doubled when using a PM-CAT filter can be tolerated, considering the saving due to the cost of the filter itself. Thus, after having understood the aforementioned aspects, it has been possible to consider the use of PM-CAT filters in combination with the active regeneration processes.

Furthermore a setting of the fuel supply system of the engine has been performed. Thus the maps injection/grade of smoke were improved. Such operation is known as useless in the field of DPF filters, since they filtrate 100% of the particulate matter. Such operation can be performed on any engine, obtaining a reduction of about 40% - 60% of the particulate matter produced by the engine.

According to a preferred embodiment of the present invention, in order to avoid that the temperatures reached in the PM-CAT filter may become too high, due to the fuel post-injection, a first temperature sensor T1 is provided between the DOC and the PM-CAT. In this way the temperature is constantly monitored in order to avoid that it exceeds 650°C, which usually happens during the regeneration of the DPF filters. During the experimentation further problems have arisen. During the procedures of regeneration, PM-CAT filters, unlike DPF filters, allow the passage of unburnt hydrocarbons, since the PM-CAT filter does not have any superficial treatment with noble metals (platinum, palladium, etc.) that can remove/convert the HC.

According to the present invention, such problem has been solved by increasing the temperature at the inlet of the DOC to an optimal value of 550°C. To that end, in order to control the process in an adequate way, the second temperature sensor T2 arranged upstream of the DOC and the first temperature sensor T1 arranged between the DOC and the PM-CAT allow to monitor in detail the regeneration process.

Always according to the present invention, such optimal interval of temperatures is reached by enriching the mixture, namely by lowering the lambda which represents the ratio between air and fuel.

The temperature control strategy just upstream the PM-CAT, namely by means of T1, allows to ensure a temperature of about 600 +/-50°C in the PM-CAT, which is lower than the regeneration temperature of the DPF.

The control of temperature at the filter, namely at the outlet of the DOC, can be controlled through the post injections suitable to carry out the exothermal reaction within the DOC needed for increasing of 50-100°C the temperature of the gas flow through the filter.

It is clear that the temperature difference between the inlet and the outlet of the DOC is at least 50°C lower than in the DOC of the know systems.

It is possible to estimate the temperatures reached in the PM-CAT filter in a predictive way, as a function of the particulate matter accumulated in the PM-CAT filter and of an amount of post-injected fuel. The sensors mentioned above, T1, T2, allow to give a feedback to the control, optimizing and stabilizing the process.

As it is known, the lambda varies in relation to the power/torque required to the engine, but the enriching that is necessary to promote the reaction, preferably of the second type, since it is more rapid, combined with the normal decrease of the lambda may result as intolerable, since the remarkable grade of smoke of the engine, above all when the power requests exceed 40% of the maximum power, induces the system to release particulate matter beyond the admissible limits. This happens because the PM-CAT filter is an open filter.

Although it is very difficult that such phenomenon occurs during a type-approval cycle, such problem has been considered.

According to a first alternative embodiment of the present invention, during the regeneration of the PM-CAT filter, maps of fuel supply/grade of smoke, different from the ones of the normal operating conditions of the vehicle, have been used in order to give a lower limit to lambda corresponding to values between 1.5 and 1.1.

According to another alternative embodiment of the present invention, during the regeneration process of the PM-CAT filter, the fuel supply map is unchanged until a remarkable torque/power is required, namely exceeding a preset threshold, for example 50% of the maximum power. Beyond such threshold, a device limiting the enrichment intervenes, namely a limiting device which avoids that the lambda goes below the aforementioned values.

In relation to said second alternative embodiment, the enrichment curve is smoothed, according to any law, for example in the lambda interval between 1.5 and 1.1, wherein the lower limit, 1.1, cannot be passed. A filter-saturator, for example, may be used in order to avoid the enrichments to exceed 1.1 - intended as a lower limit - and possibly to level/smooth the progression of the enrichment in the interval between 1.5 and 1.1, wherein 1.1 is the lower limit. These alternative embodiments have in common the use of limiting means which act in proportion to the torque/power request to the heat engine, both modifying the maps in real time and commuting to further pre-stored maps.

In this case the meaning of "filter", for the limiting means, is attributed to a logical function commonly used to program the engine control units through controllistic schemes. An example of limiting means is given for example on US20040084015.

The intervals of intervention of the limiting means may be varied according to the characteristics of the engine, to the presence of the supercharging, etc..

An interval of intervention of the limiting device around lambda=1.3, with a range for example of +/-0.2, can be considered as reasonable.

Thus the maximum effect of the enrichment of the mixture in order to heat the catalyst DOC occurs when a low torque/power is required, while such effect is reduced as the required power increases, namely as a function proportional to the delivered torque/power.

Thus it is possible to regenerate a filter unable to retain all the particulate matter, namely an open filter, unlike the DPF, and it is possible to ensure a reasonable functionality of the engine, without releasing too much pollutants in the environment.

The solutions shown so far can be applied not only in the field of the PM-CAT filters, but also in the field of the regeneration of any particulate filter that is unable to remove/burn all the unburnt hydrocarbons and to retain all the particulate matter during the regeneration of the filter itself.

Thanks to the present invention, a PM-CAT filter can be used as an alternative to a DPF filter in the field of the DPF filter usage.

On the contrary, if the present invention is used in the field of the off-road vehicles, the service life of the PM-CAT filter can be extended extraordinarily and the use of the vehicle can be also very different from the usage curves of the type-approval cycles. An optimal behaviour of the system can be guaranteed regardless of its usage.

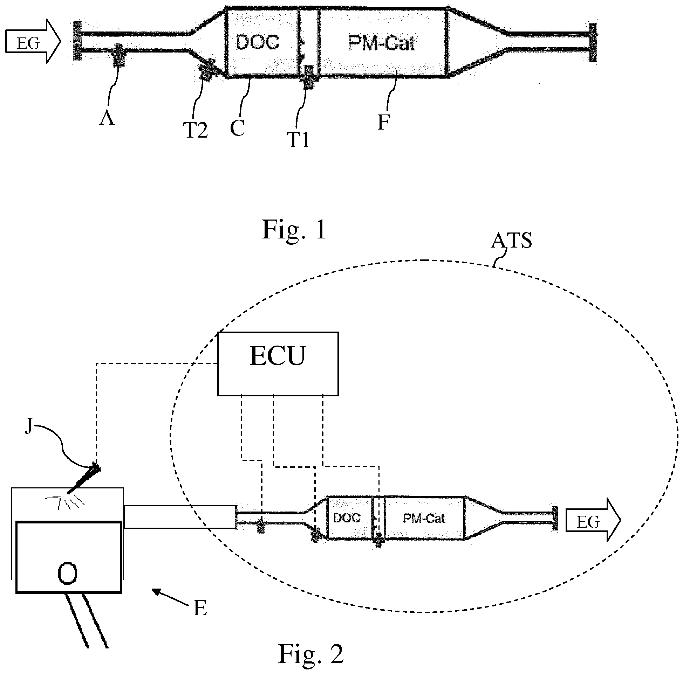

The present invention, with particular reference to the management of the fuel supply of the engine connected to the filter regeneration, may be implemented by a specific electronic hardware communicating with the control unit ECU, or such management can be carried out to the control unit ECU itself, appropriately programmed. The same is true for the estimator of the saturation level of the filter, for the system for controlling and monitoring the temperature of the DOC and for the limiting device of the mixture enrichment. Figure 1 shows a schematic view of a portion of the ATS system that is object of the present invention, comprising a catalyst C and an open-particulate filter F with a first temperature sensor placed between the catalyst and the filter.

A second temperature sensor T2 is placed upstream of the catalyst C and a lambda sensor is placed upstream the second temperature sensor T2.

Figure 2 shows an overall schematic view of the ATS system interacting with an internal combustion engine E. The estimator is integrated in the ECU which is connected to the aforementioned sensors T1, T2, lambda and which controls the injection and the post-injection of the fuel by means of the injectors J in the cylinder chambers of the internal combustion engine E.

From the description set forth above it will be possible for the person skilled in the art to embody the invention with no need of describing further construction details. The elements and the characteristics described in the different preferred embodiments may be combined between each other.

The present invention may advantageously be realized by means of a computer program, which comprises program code means performing one or more steps of said method, when said program is run on a control unit (ECU). For this reason the scope of the present patent is meant to cover also said computer program and the computer-readable means that comprise a recorded message, such computer-readable means comprising the program code means for performing one or more steps of such method, when such program is run on a control unit (ECU).

## Claims

1. Exhaust gas treatment system (ATS) for an internal combustion engine based on a PM-CAT particulate filter (F) and a Diesel Oxidation Catalyst (DOC) placed upstream of the PM-CAT filter according to a direction of the exhaust gas outflow (EG), the system comprising regeneration means suitable to promote an active regeneration reaction of particulate matter accumulated in the particulate filter (F), the PM-CAT being an open filter allowing the passage of the gases in any saturation condition of the filter itself and lacking any superficial treatment with noble metals, the system being **characterized in that** said regeneration means are configured to keep a temperature at an inlet of the Diesel Oxidation Catalyst (C) at about 550°C during an active regeneration reaction.

2. System according to claim 1, wherein said active regeneration means are suitable to increase the fuel enrichment and/or are suitable to manage fuel post-injections in order to keep the temperature of the inlet of the Diesel Oxidation Catalyst (C) at about 550°C and the temperature of the PM-CAT particulate filter (F) at a value of 600+/-50°C.

3. System according to one of the previous claims, wherein said active regeneration means comprise an estimator at least for estimating a first amount of particulate matter generated by said internal combustion engine.

4. System according to claim 3, wherein said estimator comprises means for weighing said first amount of particulate matter with a coefficient proportional to a retaining efficiency of the filter.

5. System according to one of the previous claims 3 or 4, wherein said estimator is also suitable to estimate a second amount of particulate matter converted into CO/CO₂ by means of a reaction based on the reduction of NO₂ into NO.

6. System according to one of the claims from 3 to 4, wherein said estimator is also suitable to estimate a third amount of particulate matter converted into CO/CO₂ by means of a natural reaction based on the reduction of the O₂.

7. System according to any of the previous claims, further comprising a first temperature sensor (T1) between said DOC catalyst and said PM-CAT filter (F).

8. System according to claim 7, further comprising, according to a direction of the exhaust gas flow, a second temperature sensor (T2) placed upstream of the DOC catalyst (C) and/or a lambda sensor (Λ) placed upstream of the catalyst (C) and upstream of the second temperature sensor (T2), if present.

9. Exhaust gas treatment method for controlling the system according to any of the previous claims 1 - 8, comprising the steps of (i) promoting an active regeneration of the particulate matter of said PM-CAT particulate filter, (ii) keeping a temperature of the inlet of the Diesel Oxidation catalyst (C) at about 550°C during said conversion reaction by increasing a fuel enrichment.

10. Method according to claim 9, further comprising the step (iii) managing fuel post-injections in order to keep the temperature of the PM-CAT filter at a value of 600+/-50°C.

11. Method according to claims 9 or 10, comprising the step (iv) of performing such active regeneration by controlling a temperature in the PM-CAT particulate filter (F) as a function of an overall amount of particulate matter accumulated in the particulate filter (F) and of an amount of post-injected fuel.

12. Method according claim 11, further comprising a step (v) of estimating at least a first amount of particulate matter generated by said internal combustion engine, in order to estimate said overall amount of particulate matter accumulated in the filter (F).

13. Method according to claim 11, further comprising the step (vi) of weighing said first amount of particulate matter with a coefficient proportional to a retaining efficiency of the particulate filter (F).

14. Method according to one of the claims 12 or 13, further comprising at least one of the following steps:
- (vii) estimating a second amount of particulate matter converted into CO/CO₂ by means of a natural reaction based on the reduction of NO₂ into NO;
- (viii) estimating a third amount of particulate matter converted into CO/CO₂ by means of a natural reaction based on the reduction of O₂.

15. Computer program comprising program code means adapted to perform the steps (i - viii) of any claim from 9 to 14, when such program is run on a control unit (ECU) in a system according to any one of the claims from 1 to 8.

16. Computer-readable means comprising a recorded program, said computer-readable means comprising program code means adapted to perform the steps (i - viii) according to the claims from 9 to 14, when said program is run on a control unit (ECU) in a system according to any one of the claims from 1 to 8.

17. Internal combustion engine comprising an exhaust gas treatment system (ATS) according to one of the claims from 1 to 8.

18. Vehicle comprising an internal combustion engine according to claim 17.

## Patentansprüche

1. Abgasbehandlungssystem (ATS) für eine Brennkraftmaschine, das auf einem PM-Kat-Partikelfilter (Partikeloxidationskatalysator) (F) und einem Dieseloxidationskatalysator (Diesel Oxidation Catalyst, DOC), der in einer Richtung des Abgasabflusses (EG) stromaufwärts des PM-Kat-Filters angeordnet ist, basiert, wobei das System Regenerationsmittel umfasst, die geeignet sind, eine aktive Regenerationsreaktion von in dem Partikelfilter (F) angesammeltem Feinstaub zu fördern, wobei der PM-Kat ein offenes Filter ist, welches das Hindurchströmen der Gase in beliebigem Sättigungszustand des Filters selbst ermöglicht und keinerlei Oberflächenbehandlung mit Edelmetallen aufweist, wobei das System **dadurch gekennzeichnet ist, dass** die Regenerationsmittel dafür ausgelegt sind, eine Temperatur an einem Eingang des Dieseloxidationskatalysators (C) während einer aktiven Regenerationsreaktion bei ungefähr 550 °C zu halten.

2. System nach Anspruch 1, wobei die aktiven Regenerationsmittel geeignet sind, die Kraftstoffanreicherung zu erhöhen, und/oder geeignet sind, Nacheinspritzungen von Kraftstoff zu steuern, um die Temperatur des Eingangs des Dieseloxidationskatalysators (C) bei ungefähr 550 °C und die Temperatur des PM-Kat-Partikelfilters (F) bei einem Wert von 600+/-50 °C zu halten.

3. System nach einem der vorhergehenden Ansprüche, wobei die aktiven Regenerationsmittel eine Schätzfunktion wenigstens zum Schätzen einer ersten Menge an Feinstaub, der von der Brennkraftmaschine erzeugt wurde, umfassen.

4. System nach Anspruch 3, wobei die Schätzfunktion Mittel zum Gewichten der ersten Menge an Feinstaub mit einem Koeffizienten, der zu einer Rückhalteeffizienz des Filters proportional ist, umfasst.

5. System nach einem der vorhergehenden Ansprüche 3 oder 4, wobei die Schätzfunktion außerdem geeignet ist, eine zweite Menge an Feinstaub zu schätzen, der mittels einer auf der Reduktion von NO₂ zu NO basierenden Reaktion in CO/CO₂ umgewandelt wurde.

6. System nach einem der Ansprüche 3 bis 4, wobei die Schätzfunktion außerdem geeignet ist, eine dritte Menge an Feinstaub zu schätzen, der mittels einer auf der Reduktion des O₂ basierenden natürlichen Reaktion in CO/CO₂ umgewandelt wurde.

7. System nach einem der vorhergehenden Ansprüche, welches ferner einen ersten Temperatursensor (T1) zwischen dem DOC-Katalysator und dem PM-Kat-Filter (F) umfasst.

8. System nach Anspruch 7, welches ferner, in einer Richtung des Abgasstroms, einen zweiten Temperatursensor (T2), der stromaufwärts des DOC-Katalysators (C) angeordnet ist, und/oder eine Lambda-Sonde (Λ), die stromaufwärts des Katalysators (C) und stromaufwärts des zweiten Temperatursensors (T2), falls vorhanden, angeordnet ist, umfasst.

9. Abgasbehandlungsverfahren zur Steuerung des Systems nach einem der vorhergehenden Ansprüche 1-8, welches die Schritte (i) des Förderns einer aktiven Regeneration des Feinstaubs des PM-Kat-Partikelfilters, (ii) des Haltens einer Temperatur des Eingangs des Dieseloxidationskatalysators (C) während der Umwandlungsreaktion durch Erhöhen einer Kraftstoffanreicherung bei ungefähr 550 °C umfasst.

10. Verfahren nach Anspruch 9, welches ferner den Schritt (iii) des Steuerns von Nacheinspritzungen von Kraftstoff, um die Temperatur des PM-Kat-Filters bei einem Wert von 600+/-50 °C zu halten, umfasst.

11. Verfahren nach Anspruch 9 oder 10, welches den Schritt (iv) des Durchführens einer solchen aktiven Regeneration durch Steuern einer Temperatur in dem PM-Kat-Partikelfilter (F) in Abhängigkeit von einer Gesamtmenge von in dem Partikelfilter (F) angesammeltem Feinstaub und von einer Menge von nacheingespritztem Kraftstoff umfasst.

12. Verfahren nach Anspruch 11, welches ferner einen Schritt (v) des Schätzens wenigstens einer ersten Menge an Feinstaub, der von der Brennkraftmaschine erzeugt wurde, umfasst, um die Gesamtmenge von in dem Filter (F) angesammeltem Feinstaub zu schätzen.

13. Verfahren nach Anspruch 11, welches ferner einen Schritt (vi) des Gewichtens der ersten Menge an Feinstaub mit einem Koeffizienten, der zu einer Rückhalteeffizienz des Partikelfilters (F) proportional ist, umfasst.

14. Verfahren nach einem der Ansprüche 12 oder 13, welches ferner wenigstens einen der folgenden Schritte umfasst:
- (vii) Schätzen einer zweiten Menge an Feinstaub, der mittels einer auf der Reduktion von NO₂ zu NO basierenden natürlichen Reaktion in CO/CO₂ umgewandelt wurde;
- (viii) Schätzen einer dritten Menge an Feinstaub, der mittels einer auf der Reduktion von O₂ basierenden natürlichen Reaktion in CO/CO₂ umgewandelt wurde.

15. Computerprogramm, welches Programmcodemittel umfasst, die dafür ausgelegt sind, die Schritte (i - viii) eines der Ansprüche 9 bis 14 auszuführen, wenn ein solches Programm auf einer Steuereinheit (ECU) in einem System nach einem der Ansprüche 1 bis 8 ausgeführt wird.

16. Computerlesbares Mittel, welches ein aufgezeichnetes Programm umfasst, wobei das computerlesbare Mittel Programmcodemittel umfasst, die dafür ausgelegt sind, die Schritte (i - viii) eines der Ansprüche 9 bis 14 auszuführen, wenn das Programm auf einer Steuereinheit (ECU) in einem System nach einem der Ansprüche 1 bis 8 ausgeführt wird.

17. Brennkraftmaschine, welche ein Abgasbehandlungssystem (ATS) nach einem der Ansprüche 1 bis 8 umfasst.

18. Fahrzeug, welches eine Brennkraftmaschine nach Anspruch 17 umfasst.

## Revendications

1. Système de traitement de gaz d'échappement (ATS) pour un moteur à combustion interne basé sur un filtre à particules PM-CAT (F) et un catalyseur d'oxydation pour diésel (DOC) placé en amont du filtre PM-CAT conformément à la direction d'évacuation du gaz d'échappement (EG), le système comprenant des moyens de régénération convenant pour favoriser une réaction de régénération active de la matière particulaire accumulée dans le filtre à particules (F), le PM-CAT étant un filtre ouvert permettant le passage des gaz dans n'importe quelle condition de saturation du filtre lui-même et dépourvu d'un quelconque traitement superficiel avec des métaux nobles, le système étant **caractérisé en ce que** lesdits moyens de régénération sont configurés pour maintenir une température à l'entrée du catalyseur d'oxydation pour diésel (C) d'environ 550 °C durant une réaction de régénération active.

2. Système selon la revendication 1, dans lequel lesdits moyens de régénération active conviennent pour augmenter l'enrichissement du carburant et/ou conviennent pour gérer des post-injections de carburant afin que la température de l'entrée du catalyseur d'oxydation pour diésel (C) soit maintenue à 550 °C et que la température du filtre à particules PM-CAT (F) soit maintenue à une valeur de 600 ± 50 °C.

3. Système selon l'une des revendications précédentes, dans lequel lesdits moyens de régénération active comprennent un estimateur au moins pour estimer une première quantité de matière particulaire générée par ledit moteur à combustion interne.

4. Système selon la revendication 3, dans lequel ledit estimateur comprend des moyens pour peser ladite première quantité de matière particulaire avec un coefficient proportionnel à l'efficacité de retenue du filtre.

5. Système selon l'une des revendications 3 et 4, dans lequel ledit estimateur convient aussi pour estimer une deuxième quantité de matière particulaire convertie en CO/CO₂ au moyen d'une réaction basée sur la réduction de NO₂ en NO.

6. Système selon l'une des revendications 3 et 4, dans lequel ledit estimateur convient aussi pour estimer une troisième quantité de matière particulaire convertie en CO/CO₂ au moyen d'une réaction naturelle basée sur la réduction de O₂.

7. Système selon l'une quelconque des revendications précédentes, comprenant en outre un premier capteur de température (T1) entre ledit catalyseur DOC et ledit filtre PM-CAT (F).

8. Système selon la revendication 7, comprenant en outre, conformément à la direction de passage du gaz d'échappement, un deuxième capteur de température (T2) placé en amont du catalyseur DOC (C) et/ou une sonde lambda (**Λ**) placée en amont du catalyseur (C) et en amont du deuxième capteur de température (T2), s'il est présent.

9. Procédé de traitement de gaz d'échappement pour contrôler le système selon l'une quelconque des revendications 1 à 8, comprenant les étapes de (i) promotion d'une régénération active de la matière particulaire dudit filtre à particules PM-CAT, (ii) maintien d'une température de l'entrée du catalyseur d'oxydation pour diésel (C) à environ 550 °C durant ladite réaction de conversion par augmentation de l'enrichissement du carburant.

10. Procédé selon la revendication 9, comprenant en outre l'étape (iii) de gestion des post-injections de carburant afin que la température du filtre PM-CAT soit maintenue à une valeur de 600 ± 50 °C.

11. Procédé selon la revendication 9 ou 10, comprenant l'étape (iv) de mise en oeuvre d'une telle régénération active par contrôle de la température dans le filtre à particules PM-CAT (F) en fonction de la quantité globale de matière particulaire accumulée dans le filtre à particules (F) et de la quantité de carburant post-injecté.

12. Procédé selon la revendication 11, comprenant en outre une étape (v) d'estimation au moins d'une première quantité de matière particulaire générée par ledit moteur à combustion interne, afin que soit estimée ladite quantité globale de matière particulaire accumulée dans le filtre (F).

13. Procédé selon la revendication 11, comprenant en outre l'étape (vi) de pondération de ladite première quantité de matière particulaire avec un coefficient proportionnelle à l'efficacité de retenue du filtre particulaire (F).

14. Procédé selon l'une des revendications 12 et 13, comprenant en outre au moins l'une des étapes suivantes :
(vii) estimation d'une deuxième quantité de matière particulaire convertie en CO/CO₂ au moyen d'une réaction naturelle basée sur la réduction de NO₂ en NO ;
(viii) estimation d'une troisième quantité de matière particulaire convertie en CO/CO₂ au moyen d'une réaction naturelle basée sur la réduction de O₂.

15. Programme informatique comprenant des moyens formant code de programme adaptés pour effectuer les étapes (i - viii) de l'une quelconque des revendications 9 à 14, quand ce programme est exécuté sur une unité de commande (ECU) dans un système selon l'une quelconque des revendications 1 à 8.

16. Moyen lisible par ordinateur comprenant un programme enregistré, ledit moyen lisible par ordinateur comprenant des moyens formant code de programme adaptés pour effectuer les étapes (i - viii) selon les revendications 9 à 14, quand ce programme est exécuté sur une unité de commande (ECU) dans un système selon l'une quelconque des revendications 1 à 8.

17. Moteur à combustion interne comprenant un système de traitement de gaz d'échappement (ATS) selon l'une des revendications 1 à 8.

18. Véhicule comprenant un moteur à combustion interne selon la revendication 17.
